# EUROPEAN PATENT APPLICATION

(11) **EP 4 361 806 A1**
(43) Date of publication of application: **01.05.2024**
(21) Application number: 22848053.9
(22) Date of filing: 09.06.2022
(51) Int. Cl.: G06F 9/451

(54) **TERMINAL DESKTOP DISPLAY METHOD AND APPARATUS, AND ELECTRONIC DEVICE**

(30) Priority: 30.07.2021 CN 202110870863
(71) Applicant: ZTE Corporation, Shenzhen, Guangdong 518057 (CN)
(72) Inventor: WEN, Xin, Shenzhen, Guangdong 518057 (CN)
(74) Representative: Zoli, Filippo
(86) International application number: PCT/CN2022/097919
(87) International publication number: WO 2023/005444

(57) **Abstract**

Embodiments of the present disclosure disclose a terminal desktop display method, comprising: acquiring an overall view of a decorated desktop component; according to the overall view of the component, acquiring a root view of the component; offsetting the root view; and adding a new view to the offset vacant area.

## Description

### CROSS-REFERENCE TO RELATED APPLICATION

This application is filed on the basis of Chinese patent application No. CN202110870863.4 filed July 30, 2021, entitled "terminal desktop display method and apparatus, an electronic device", and claims priority to the Chinese patent application, the entire contents of which are incorporated herein by reference.

### TECHNICAL FIELD

The present disclosure relates to the field of terminal desktop adjustment, and more particularly, to a terminal desktop display method and apparatus, an electronic device, and a computer-readable storage medium.

### BACKGROUND

Desktop user interfaces of operating systems of intelligent terminals are collectively referred to as launchers. The launcher is a desktop launcher application in an operating system of a terminal, is one of the main program components in the operating system of the terminal, and is also one of the applications involving most user interaction. In all conventional launcher applications, functions that allow editing and selection by the user are realized based on changes made to the whole.

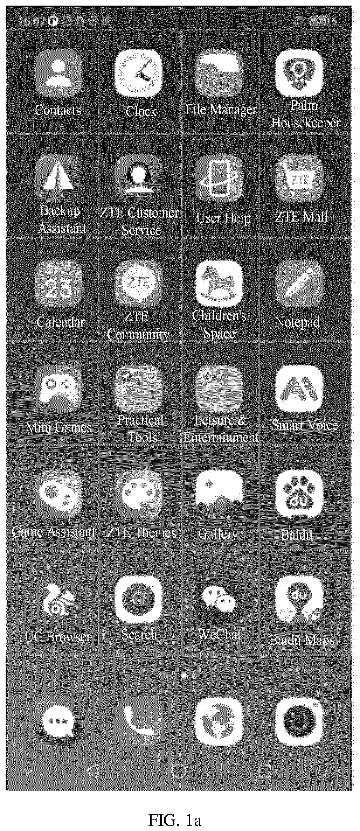

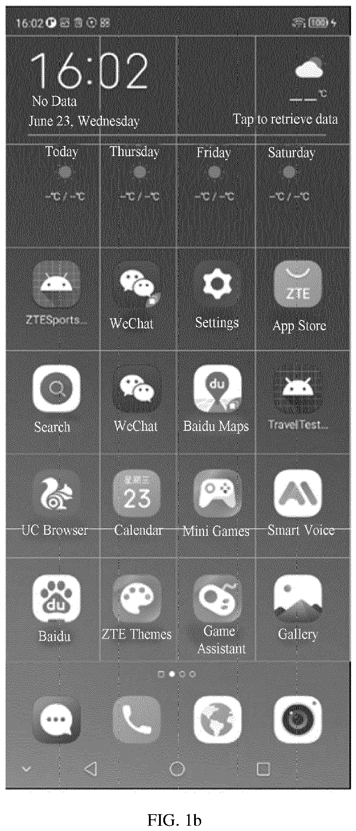

However, in conventional launcher applications of intelligent terminals, icons are distributed and arranged in the form of a grid (as shown by grid blocks in FIG. 1). Taking the most common 6*4 grid as an example, as shown in FIG. 1a, a page is full of application icons, each application icon occupying a space of 1*1 block. The entire desktop includes a maximum number of 24 blocks, and a maximum of 24 application icons can be arranged on one screen display interface. As shown in FIG. 1b, a weather widget of 4*2 is added, which occupies a space of 8 blocks, and only 16 icons each occupying a space of 1*1 block can be arranged in the remaining space.

The layout of the desktop strictly follows the arrangement of blocks in the grid, the space occupied is measured in blocks, and occupation of half a block is not supported. In the case shown in FIG. 1b, there is a large blank region around the widget (on the desktop), and the actual space occupied by the widget does not reach 4*2 blocks. However, due to the layout requirements, the occupied space needs to be rounded up to 8 blocks. As a result, the content display ratio of the screen is reduced to a certain extent. How to avoid the waste of screen resources in this case is an urgent technical problem to be addressed.

### SUMMARY

To address the above technical problem, the present disclosure provides a terminal desktop display method, to add a display view without affecting the original desktop layout or occupying a new grid block on the desktop.

To achieve the above objective, an embodiment of the present disclosure provides a terminal desktop display method, including: acquiring an overall view of a decorated desktop component; acquiring a root view of the desktop component according to the overall view of the desktop component; offsetting the root view; and adding a new view in a vacant region after the offsetting.

To achieve the above objective, an embodiment of the present disclosure further provides a terminal desktop display apparatus, including: an acquisition module, configured for acquiring an overall view of a decorated desktop component, and acquiring a root view of the desktop component according to the overall view of the desktop component; an offsetting module, configured for offsetting the root view; and an addition module, configured for adding a new view in a vacant region after the offsetting.

To achieve the above objective, an embodiment of the present disclosure further provides an electronic device, configured for executing the terminal desktop display method.

To achieve the above objective, an embodiment of the present disclosure further provides a computer-readable storage medium, storing one or more programs which, when executed by a processor, cause the processor to implement the terminal desktop display method.

### BRIEF DESCRIPTION OF DRAWINGS

FIG. 1a is a schematic diagram of a grid layout on a desktop in an existing technology;
FIG. 1b is a schematic diagram of a grid layout on a desktop in an existing technology, in which the grid layout is not fully utilized;
FIG. 2 is a schematic flowchart of a terminal desktop display method according to an embodiment of the present disclosure;
FIG. 3 is a schematic diagram of a terminal desktop display apparatus according to an embodiment of the present disclosure;
FIG. 4 is a detailed schematic flowchart of an implementation of terminal desktop display according to an embodiment of the present disclosure;
FIG. 5 is a detailed schematic flowchart of using a news carousel according to an embodiment of the present disclosure;
FIG. 6a to FIG. 6c are schematic diagrams of a process of implementing terminal desktop display according to an embodiment of the present disclosure;
FIG. 7 is a schematic diagram before implementation of terminal desktop display according to an embodiment of the present disclosure;
FIG. 8 is a schematic diagram showing an effect obtained after implementation of terminal desktop display according to an embodiment of the present disclosure;
FIG. 9 is a detailed schematic flowchart of another implementation of terminal desktop display according to an embodiment of the present disclosure;
FIG. 10a to FIG. 10c are schematic diagrams of another process of implementing terminal desktop display according to an embodiment of the present disclosure; and
FIG. 11 is a schematic structural diagram of an electronic device according to an embodiment of the present disclosure.

### DETAILED DESCRIPTION

Embodiments of the present disclosure are described below in conjunction with the drawings. It should be understood that the embodiments described herein are merely used to illustrate and explain the present disclosure, and are not used to limit the present disclosure.

Embodiments of the present disclosure provide a terminal desktop display method, including: acquiring an overall view of a decorated desktop component; acquiring a root view of the desktop component according to the overall view of the desktop component; offsetting the root view; and adding a new view in a vacant region after the offsetting.

### Embodiment 1

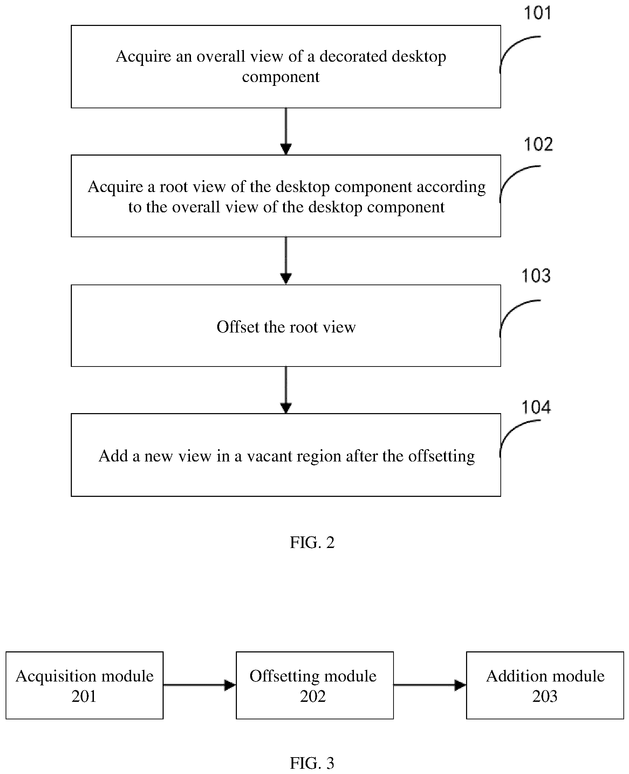

FIG. 2 is a schematic flowchart of a terminal desktop display method according to an embodiment of the present disclosure. A process of the terminal desktop display method according to the embodiments of the present disclosure will be described in detail below with reference to FIG. 2.

First, in a step of 101, an overall view of a decorated desktop component is acquired.

In some implementations, when a system refreshes all desktop components, the overall view of the decorated desktop component is captured on a desktop through a system interface.

In a step of 102, a root view of the desktop component is acquired according to the overall view of the desktop component.

In some implementations, the root view of the desktop component is further acquired according to the acquired overall view of the decorated desktop component.

In a step of 103, the root view is offset.

In some implementations, the root view is offset within a range of an original grid block.

In some implementations, the offsetting may be upward offsetting or downward offsetting.

In some implementations, the root view may be shifted leftward or rightward as required.

In some implementations, the root view may be compressed within the range of the original grid block.

In some implementations, the root view may be offset and compressed within the range of the original grid block.

In a step of 104, a new view is added in a vacant region after the offsetting.

In some implementations, a new view may be added in the vacant region.

In some implementations, the new view is a view list including functional controls.

In some implementations, the view list includes a hot news carousel, a search bar with a global search function, and a customized item which is set according to an individual requirement of a user.

Embodiments of the present disclosure provide a terminal desktop display apparatus, including an acquisition module, an offsetting module, and an addition module.

The acquisition module is configured for acquiring an overall view of a decorated desktop component, and acquiring a root view of the desktop component according to the overall view of the desktop component.

The offsetting module is configured for offsetting the root view.

The addition module is configured for adding a new view in a vacant region after the offsetting.

### Embodiment 2

FIG. 3 is a schematic diagram of a terminal desktop display apparatus according to an embodiment of the present disclosure. The terminal desktop display apparatus according to the embodiments of the present disclosure will be described in detail below with reference to FIG. 3.

In the terminal desktop display apparatus of the embodiments of the present disclosure, the acquisition module acquires a root view of a decorated component, then the offsetting module offsets the root view, and finally the addition module adds a new view in a vacant region after the offsetting of the root view.

First, the acquisition module 201 is described.

In an embodiment of the present disclosure, the acquisition module 201 is configured for acquiring an overall view of a decorated desktop component, and acquiring a root view of the desktop component according to the overall view of the desktop component.

In some implementations, when a system refreshes all desktop components, the acquisition module 201 captures the overall view of the decorated desktop component on a desktop of a terminal through a system interface.

In some implementations, the root view of the desktop component is further acquired according to the acquired overall view of the decorated desktop component.

Next, the offsetting module 202 is described.

In an embodiment of the present disclosure, the offsetting module 202 is configured for offsetting the root view.

In some implementations, the root view is offset within a range of an original grid block.

In some implementations, the offsetting may be upward offsetting or downward offsetting.

In some implementations, the root view may be shifted leftward or rightward as required.

In some implementations, the root view may be compressed within the range of the original grid block.

In some implementations, the root view may be offset and compressed within the range of the original grid block.

Finally, the addition module 203 is described.

In an embodiment of the present disclosure, the addition module 203 is configured for adding a new view in a vacant region after the offsetting of the root view.

In some implementations, a new view may be added in the vacant region.

In some implementations, the new view is a view list including functional controls.

In some implementations, the view list includes a hot news carousel, a search bar with a global search function, and a customized item which is set according to an individual requirement of a user.

### Embodiment 3

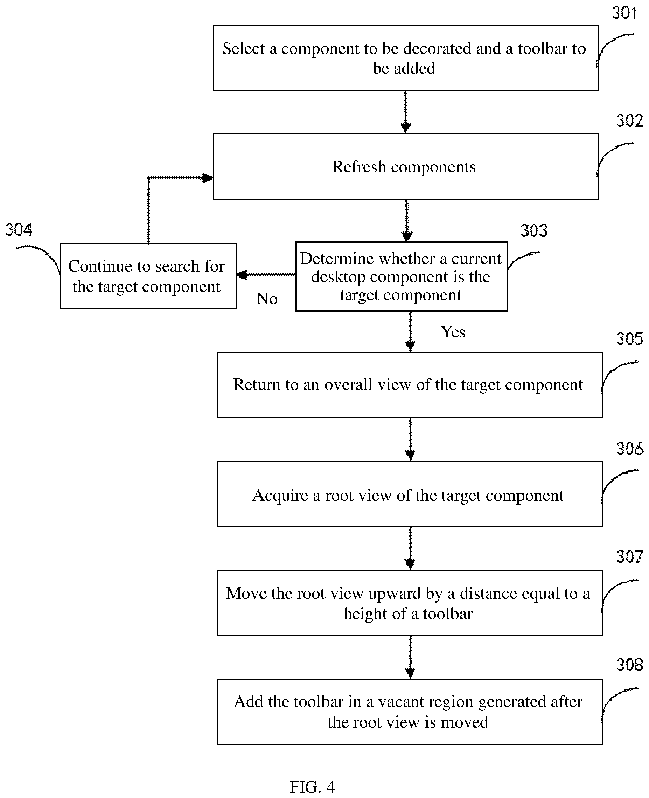

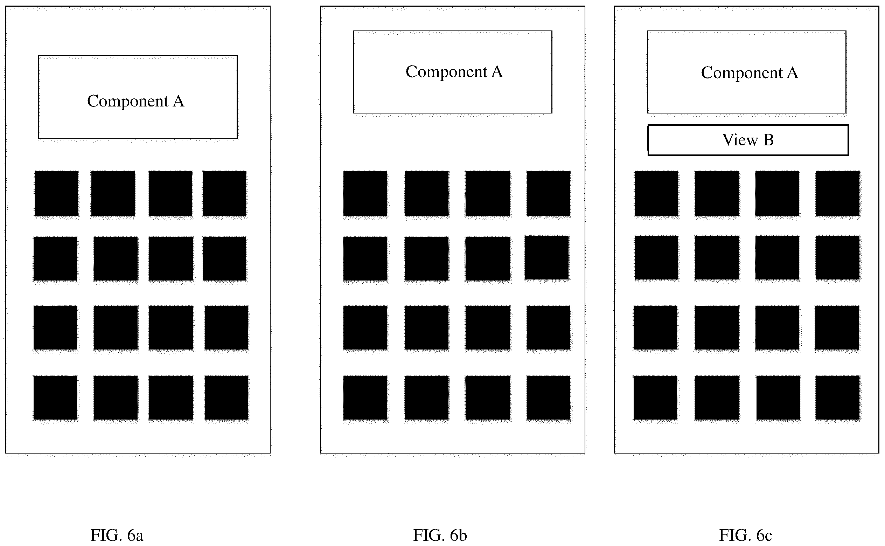

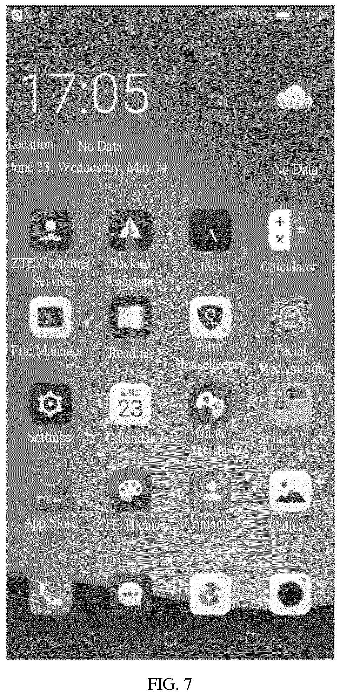

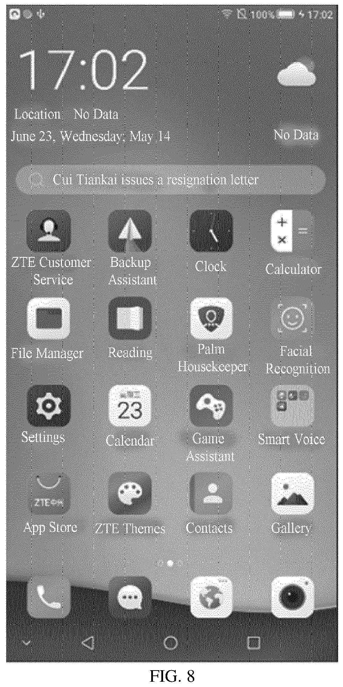

FIG. 4 is a detailed schematic flowchart of an implementation of terminal desktop display according to an embodiment of the present disclosure. FIG. 6a to FIG. 6c are schematic diagrams of a process of implementing terminal desktop display according to an embodiment of the present disclosure. FIG. 7 is a schematic diagram before implementation of terminal desktop display according to an embodiment of the present disclosure. FIG. 8 is a schematic diagram showing an effect obtained after implementation of terminal desktop display according to an embodiment of the present disclosure. The schematic diagrams in FIG. 6a-6c to FIG. 8 are all schematic diagrams of a to-be-added view after the moved component is moved upward, but it does not mean that an operation of adding a toolbar can be performed only when the component is moved upward. A process of the terminal desktop display method according to the embodiments of the present disclosure will be described in detail below with reference to FIG. 4 and FIG. 6a-6c to FIG. 8.

In an embodiment of the present disclosure, the terminal desktop display method is described in detail by taking addition of a toolbar as an example.

First, in a step of 301, a component to be decorated and a toolbar to be added are selected.

In some implementations, a desktop component to be decorated, i.e., a target component, and a toolbar to be added are first determined.

In some implementations, an edit menu is added to a launcher, where a plurality of selectable views are provided in the menu, and each of the views has an independent set of functions.

In an implementation, the selectable views may be toolbars.

In a step of 302, components are refreshed.

In some implementations, all desktop components of a terminal page are refreshed to find a decorated desktop component.

In a step of 303, it is determined whether a current desktop component is the target component.

In some implementations, it is determined whether the current desktop component is the selected decorated desktop component, i.e., whether the current desktop component is the target desktop component.

In some implementations, if a determination result is yes, a step 305 is executed; otherwise, a step 304 is executed.

In the step 304, the target component continues to be searched for.

In some implementations, when it is determined that the current desktop component is not the decorated desktop component, i.e., not the target desktop component, step 302 is executed again to continue to refresh the desktop components.

In the step 305, an overall view of the target component is returned to.

In some implementations, when it is determined that the current desktop component is the target desktop component, the overall view of the target desktop component is returned to.

In some implementations, an interface is called to acquire the overall view of the target desktop component.

In a step of 306, a root view of the target component is acquired.

In some implementations, an interface is called to obtain the root view of the target desktop component.

In a step of 307, the root view is moved upward by a distance equal to a height of a toolbar.

In some implementations, the root view of the target desktop component is moved upward by a height distance required by the toolbar.

In some implementations, as shown in FIG. 6a and FIG. 7, the terminal page is already full of views, but there is a waste of view resources.

In some implementations, FIG. 6b is a schematic diagram after the root view of the target desktop component is moved upward.

In some implementations, the root view in the embodiments of the present disclosure may alternatively be moved downward by a height distance required by the toolbar.

In some implementations, the root view in the embodiments of the present disclosure may alternatively be moved leftward or rightward by a length distance required by the toolbar.

In some implementations, a new root view is obtained after the target desktop component is moved.

In a step of 308, the toolbar is added in a vacant region generated after the root view is moved.

In some implementations, the selected toolbar is added in the vacant region generated after the root view is moved. In other words, the toolbar is added in the vacant region left on the new root view after the root view is moved.

In some implementations, FIG. 6c and FIG. 8 are example diagrams of an effect obtained by adding the toolbar in the vacant region obtained by moving the target root view upward.

### Embodiment 4

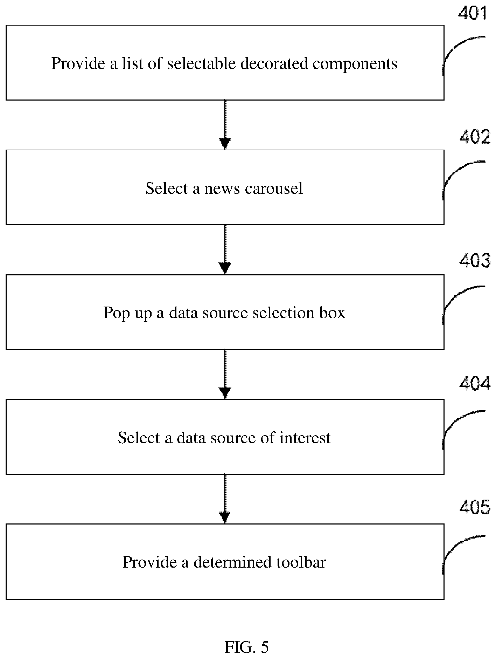

FIG. 5 is a detailed schematic flowchart of using a news carousel according to an embodiment of the present disclosure. A process of the terminal desktop display method according to the embodiments of the present disclosure will be described in detail below with reference to FIG. 5.

First, in a step of 401, a list of selectable decorated components is provided.

In some implementations, a system program provides a functional view list for selection by a user.

In a step of 402, a hot news carousel is selected.

In some implementations, the user selects a view of the hot news carousel.

In a step of 403, a data source selection box is popped up.

In some implementations, according to the above selection, news data sources are popped up for selection by the user.

In some implementations, the popped-up news data source may be Baidu news, Tencent news, NetEase news, etc.

In a step of 404, a data source of interest is selected.

In some implementations, the user selects a data source based on the above-mentioned popped-up news data sources.

In some implementations, the data sources are combined into a large data set, which is provided as source data to a view with a news carousel function.

In a step of 405, a determined toolbar is provided.

In some implementations, based on the above selection, a news carousel view is returned to. The news carousel view has a function of cyclically displaying news data. The news data is from the data set provided in step 404.

### Embodiment 5

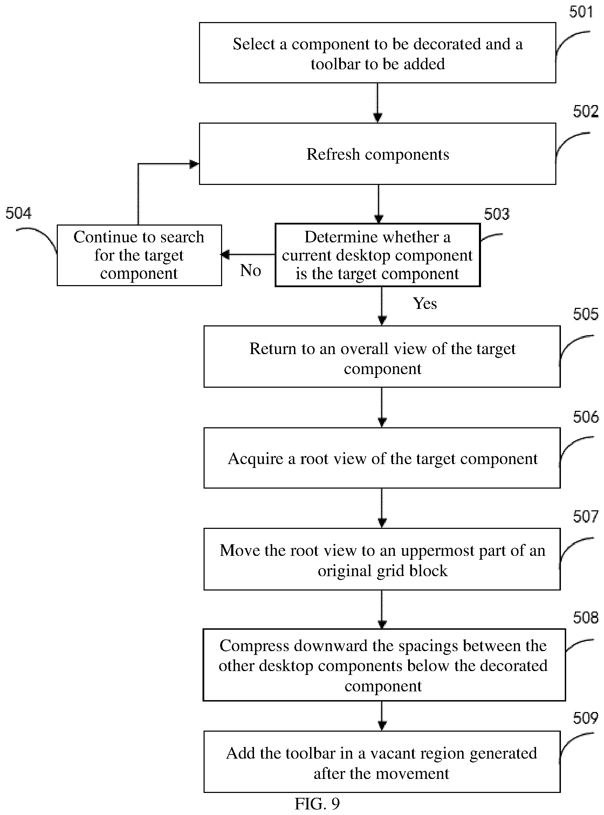

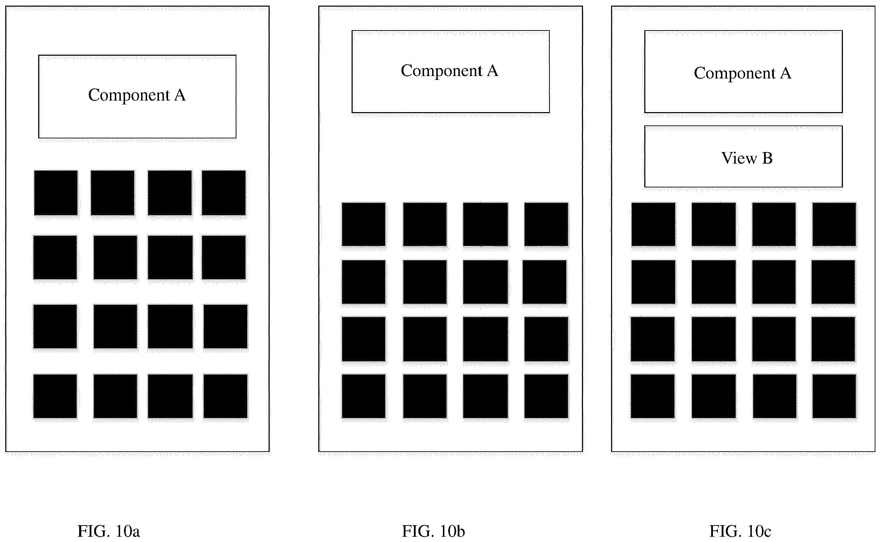

FIG. 9 is a detailed schematic flowchart of another implementation of terminal desktop display according to an embodiment of the present disclosure. FIG. 10a to FIG. 10c are schematic diagrams of another process of implementing terminal desktop display according to an embodiment of the present disclosure. FIG. 10a to FIG. 10c show that while the target desktop component is moved upward, spacings between other desktop components located on the same desktop below the target desktop component are compressed downward synchronously, and a new view is added in a vacant space obtained by the upward movement and downward compression. However, it does not mean that an operation of adding a toolbar can be performed only when the target desktop component is moved upward and the spacings between other desktop components located on the same desktop below the target desktop component are compressed downward. A process of the terminal desktop display method according to the embodiments of the present disclosure will be described in detail below with reference to FIG. 9 to FIG. 10a-10c.

A problem to be solved by the embodiments of the present disclosure is that a vacant region generated by moving the target desktop component can no longer satisfy the display of to-be-added content that requires a larger vacant region.

In an embodiment of the present disclosure, the terminal desktop display method is described in detail by taking addition of a toolbar as an example.

First, in a step of 501, a component to be decorated and a toolbar to be added are selected.

In some implementations, a desktop component to be decorated, i.e., a target desktop component, and a toolbar to be added are first determined.

In some implementations, an edit menu is added to a launcher, where a plurality of selectable views are provided in the menu, and each of the views has an independent set of functions.

In an implementation, the selectable views may be toolbars.

In a step of 502, components are refreshed.

In some implementations, all desktop components of a terminal page are refreshed to find a decorated desktop component (target desktop component).

In a step of 503, it is determined whether a current desktop component is the target component.

In some implementations, it is determined whether the current desktop component is the selected decorated desktop component, i.e., whether the current desktop component is the target desktop component.

In some implementations, if a determination result is yes, a step 505 is executed; otherwise, a step 504 is executed.

In the step 504, the target component continues to be searched for.

In some implementations, when it is determined that the current desktop component is not the decorated desktop component, i.e., not the target desktop component, step 502 is executed again to continue to refresh the desktop components.

In the step 505, an overall view of the target component is returned to.

In some implementations, when it is determined that the current desktop component is the target desktop component, the overall view of the target desktop component is returned to.

In some implementations, an interface is called to acquire the overall view of the target desktop component.

In a step of 506, a root view of the target component is acquired.

In some implementations, an interface is called to obtain the root view of the target desktop component.

In a step of 507, the root view is moved to an uppermost part of an original grid block.

In some implementations, because the desktop components are arranged in the form of a grid, the root view is moved to the uppermost part of the original grid block.

In some implementations, as shown in FIG. 10a, the terminal page is already full of views, but there is a waste of view resources.

In some implementations, a vacant region generated by moving the target desktop component cannot fully display or cannot well display the to-be-added component content. Therefore, vertical spacings between other applications (desktop components) located on the same desktop below the target desktop component need to be compressed downward synchronously. In this way, under a joint action of moving the target desktop component and compressing the spacings between applications (desktop components) below the target desktop component, a larger vacant region is generated, and a larger display content can be arranged in the new vacant region.

In some implementations, FIG. 10b is a schematic diagram of an effect obtained by moving the root view of the target desktop component upward within the original grid block and compressing downward the spacings between other applications (desktop components) located on the same desktop below the target desktop component.

In some implementations, the root view in the embodiments of the present disclosure may alternatively be moved downward by a height distance required by the toolbar.

In some implementations, the root view in the embodiments of the present disclosure may alternatively be moved leftward or rightward by a length distance required by the toolbar.

In a step of 508, the spacings between the other desktop components below the decorated component are compressed downward.

In some implementations, vertical spacings between the other applications (desktop components) located on the same desktop below the decorated component (target desktop component) are compressed downward synchronously.

In some implementations, FIG. 10b is a schematic diagram of an effect achieved by moving the root view of the target desktop component upward and compressing downward the spacings between other applications (desktop components) located on the same desktop below the target desktop component.

In some implementations, the spacings between the other applications (desktop components) below the target desktop component may also be synchronously compressed along a direction of movement of the target desktop component.

In some implementations, a new root view is obtained after the target component is moved.

In a step of 509, the toolbar is added in a vacant region generated after the movement.

In some implementations, the selected toolbar is added in a vacant region generated by moving the root view and compressing the spacings between the other desktop components below the target desktop component along a corresponding direction. In other words, the toolbar is added in the vacant region left on the new root view after the target root view is moved.

In some implementations, FIG. 10c is an example diagram of an effect obtained by adding the selected toolbar in the vacant region generated by moving the target root view and compressing the spacings between the other desktop components below the target desktop component along the corresponding direction.

In some implementations, the root view of the target desktop component is compressed to further enlarge the vacant region, such that there is a sufficient vacant region for displaying the toolbar, thereby ensuring the display effect.

### Embodiment 6

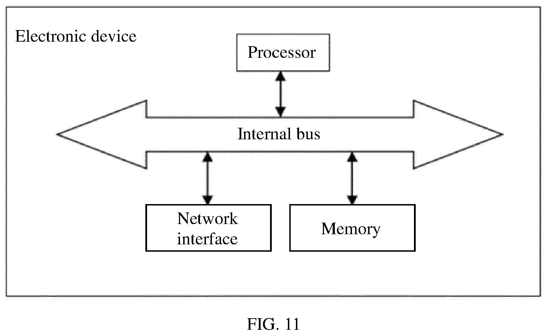

FIG. 11 is a schematic structural diagram of an electronic device according to an embodiment of the present disclosure. As shown in FIG. 11, in terms of hardware, the electronic device includes a processor, and optionally further includes an internal bus, a network interface, and a memory. The memory may include an internal memory, such as a high-speed Random-Access Memory (RAM), and may further include a non-volatile memory, e.g., at least one disk memory, etc. The electronic device may also include hardware required for other services.

The processor, the network interface, and the memory may be connected to each other through the internal bus. The internal bus may be an Industry Standard Architecture (ISA) bus, a Peripheral Component Interconnect (PCI) bus, an Extended Industry Standard Architecture (EISA) bus, etc. The bus may include an address bus, a data bus, a control bus, etc. For ease of illustration, the bus is denoted only by a double-headed arrow in FIG. 11, but it does not mean that there is only one bus or one type of bus.

The memory is configured to store a program. For example, the program may include program code, which includes computer-executable instructions.

The processor reads the corresponding computer program from the non-volatile memory to the memory and then runs the corresponding computer program, to logically form a terminal desktop display apparatus. The processor executes the program stored in the memory, to implement the terminal desktop display method.

### Embodiment 7

An embodiment of the present disclosure further provides a computer-readable storage medium, storing one or more programs. The one or more programs include instructions which, when executed by a portable electronic device including a plurality of application programs, cause the portable electronic device to implement the methods of the embodiments shown in the drawings, to be specific, the terminal desktop display method.

According to the terminal desktop display method of the embodiments of the present disclosure, an overall view of a decorated desktop component is acquired, a root view of the component is acquired according to the overall view of the component, and the root view is offset. A new view is added in a vacant region after the offsetting. In this way, contents of widgets on a desktop can be expanded without affecting the original desktop layout, thereby maximizing the utilization of screen space and meeting the user's desktop personalization requirements. The method allows a full use of the screen space, increases the screen utilization rate, and avoids waste of screen resources caused by arbitrary occupation of the desktop layout to leave a large vacant region. Profits may also be made by pushing advertisements on the new view.

Although the implementations disclosed in the present disclosure have been described above, the contents are used for facilitating the understanding of the present disclosure only and are not intended to limit the present disclosure. Those having ordinary skills in the art can make any modification and change in the form and details of implementation without departing from the scope disclosed in the present disclosure, but the protection scope of the present disclosure shall still be subject to the scope defined by the appended claims.

## Claims

1. A terminal desktop display method, comprising:
acquiring an overall view of a decorated desktop component;
acquiring a root view of the desktop component according to the overall view of the desktop component;
offsetting the root view; and
adding a new view in a vacant region after the offsetting.

2. The method of claim 1, wherein offsetting the root view further comprises: compressing the root view.

3. The method of claim 1, wherein the new view is a view list comprising functional controls.

4. The method of claim 3, wherein the view list comprises a hot news carousel, pushed information, a search bar, or a customized item.

5. The method of claim 1, wherein offsetting the root view comprises: offsetting the root view vertically in an original grid block.

6. The method of claim 5, wherein a length by which the root view is offset is equal to a width of the new view.

7. The method of claim 5, wherein a spacing between other desktop components on a desktop where the decorated desktop component is located is compressed in a corresponding direction.

8. The method of claim 1, wherein adding a new view in a vacant region after the offsetting comprises: adding the new view to the root view in the vacant region after the offsetting.

9. A terminal desktop display apparatus, comprising:
an acquisition module, configured for acquiring an overall view of a decorated desktop component, and acquiring a root view of the desktop component according to the overall view of the desktop component;
an offsetting module, configured for offsetting the root view; and
an addition module, configured for adding a new view in a vacant region after the offsetting.

10. An electronic device, comprising:
a processor; and
a memory, configured for storing a computer-executable instruction which, when executed by the processor, causes the processor to perform the terminal desktop display method of any one of claims 1 to 7.

11. A computer-readable storage medium, storing one or more programs which, when executed by an electronic device comprising a plurality of application programs, cause the electronic device to perform the terminal desktop display method of any one of claims 1 to 7.
